Europäisches Patentamt

European Patent Office

Office européen des brevets

(11) Publication number: **0 516 321 A1**

# EUROPEAN PATENT APPLICATION

(21) Application number: **92304484.6**

(22) Date of filing: **18.05.92**

(51) Int. Cl.5: **F16B 37/04**, F16F 1/18

(30) Priority: **30.05.91 GB 9111647**

(43) Date of publication of application:
**02.12.92 Bulletin 92/49**

(84) Designated Contracting States:
**AT BE CH DE DK ES FR GB GR IT LI LU MC NL PT SE**

(71) Applicant: **Unistrut Europe PLC**
**Edison Road Elms Industrial Estate**
**Bedford MK41 OHU(GB)**

(72) Inventor: **Saul, Dereck**
**14 St. Neots Road, Eaton Ford**
**Huntington, Cambridgeshire PE19 3BD(GB)**
Inventor: **Stevens, Matthew**
**15 Chapel Lane**
**Willington, Bedfordshire MK44 3OG(GB)**

(74) Representative: **Howden, Christopher Andrew**
**FORRESTER & BOEHMERT**
**Franz-Joseph-Strasse 38**
**W-8000 München 40(DE)**

(54) Improvements in or relating to channel fixing devices.

(57) A spring (40) is provided which may readily be formed from resilient plastics and which can be used, in place of the conventional captive steel wire coil spring to hold in its desired place in a channel section member (12) a channel nut (16) to receive a screw-threaded bolt (26) for securing a structural member (24), for example to the channel section member, the spring (40) comprises a plug portion, comprising a spigot (46), head (47) and radially projecting vanes (48) and a resiliently flexible portion in the form of a fork or inverted "U", comprising legs (42) and a connecting portion (44), the plug portion (46, 47, 48) projecting from the connecting portion (44). In use, the plug portion (46, 47, 48) is inserted as an interference fit in the bore of the channel nut to be secured, then is inserted in the fixing channel (12) with the nut, elastically stressing the legs (42) by engagement of the legs with the channel base, and the nut is turned through 90° within the channel so that it is held in place by the spring. Subsequent insertion of the bolt (26) into the bore in the nut drives out the plug portion, allowing the spring (40) to be recovered, for re-use if undamaged.

Fig.3

THIS INVENTION relates to means for securing members or fitments to channel-section members of the kind in which the channel mouth is defined between inwardly directed flanges such that the width of the channel mouth is less than the internal width of the channel. Such channel members are herein referred to as being "of the kind specified".

It is known to secure, to such channel section members, fitments or structural members, such as other channel members by means of nuts and bolts which may be located at any desired position along the respective channel members whereby, for example, frameworks of desired dimensions and shapes may be contrived. In a known system, developed by the applicants, the nuts used are so-called channel nuts which are of oblong shape as viewed along the axis of the screw threaded bore through the nut, the width of the oblong being somewhat less than the width of the channel mouth for which the nut is intended and the length of the nut being somewhat greater than the width of the channel mouth but less than the width of the channel so that the nut can be inserted into the channel with its longer dimension lying in the longitudinal direction of the channel, through the channel mouth, and can be turned, once inside the channel, so that its longer dimension lies transversely of the channel. In use, the nut is retained in the last-noted position whilst the respective bolt, passed through a fixing hole in the member outside the channel, is passed into the channel, through the mouth thereof and screwed into the nut, so that eventually the channel flanges are clamped between the nut within the channel and the member, outside the channel, lying on the outer surfaces of the channel flanges. Such a nut is herein referred to as being a "channel nut of the kind specified".

In the known system referred to above, the channels of the kind specified are formed by cold rolling steel strip and each such channel comprises a flat base wall, opposite side walls extending from the base wall at right angles thereto, flange webs extending towards one another, in a common plane parallel with the base wall, from the edges of the side walls remote from the base wall. Each such channel also has inwardly turned lips extending, from the edges of the flange webs which are closer to one another, from the flange webs towards the base wall, the last noted lips being herein referred to, for convenience, as the inturned edges of the channel. The preferred form of fixing nut utilised with channels of the last-noted type is provided with parallel grooves, on one face, on either side of the screw threaded bore, extending across such face perpendicular to the longer dimension of the nut, the spacing between such grooves being such that, in use, the inturned edges of the channel engage in such grooves to assist in retaining the nut in its correct position as the respective bolt, passed through the nut, is tightened up.

Furthermore, to avoid the necessity of holding such a nut in position by hand whilst the respective bolt is screwed into the nut, in this known system, each nut is provided with a coiled steel spring, secured to its face opposite that provided with the grooves and coaxial with the nut bore, the spring being so dimensioned as to allow it to pass through the channel mouth with the nut and of such a length, in its unstressed position, that the spring must be compressed to allow the nut to pass the flange webs at the mouth of the channel, for turning within the channel, so that, once the nut has been turned and released, the spring will force the nut away from the channel base against the inturned edges of the channel and thereby hold the nut frictionally in position whilst the respective bolt is located and screwed into the nut.

The spring has only one, short lived, use: that is to hold the nut in place with the inturned edges of the channel engaged in said grooves in the nut while a fitting or bracket is positioned and a bolt inserted. Once the assembly has been torqued up then the spring serves no more useful purpose, unless the assembly is dismantled and the nut re-used.

Of course, it is not necessary to use a nut with a spring attached and indeed typically some 30% of the nuts used with the known system may be plain, unsprung nuts.

In the known system referred to, each said spring is wound from steel wire and fixed to the body of the nut by a mechanical peening process. The spring has however some inherent disadvantages.

Thus, the nut and spring combination is unstable during fitting, in the sense that, unless the pressure applied on the nut when compressing the spring is exactly along the axis of the windings then the assembly will tend to slip. This condition is made worse if the spring is not fixed squarely onto the base of the nut.

The nut is dedicated, i.e. if a nut is to have such a spring the spring must be fixed at the factory. If a customer wants a mixture of sprung and unsprung nuts he must place separate orders.

Typically the nuts, with springs attached, are sold loose in a box or bag and, because the springs are of an "open" configuration, they tend to get entangled. Being bounced around in the box and also being forcibly disentangled causes some springs to part company with their parent nut, with no facility for the customer to re-fix.

Sometimes it is convenient to pass cables, wire or small pipes along the length of a channel. If fittings have been attached using sprung nuts, the nut springs obstruct the channel and this can severely disrupt such passage of cables, wire, etc. along the channels.

The springs can rust and discolour the channel. The nature of the spring and the thin coating of zinc protecting it, allows the spring to rust quickly when used outside or in hostile environments. This rusting tends to discolour the inside of the channel in the locality of the spring which will eventually corrode through and part company with the parent nut.

Many attempts have been made to overcome some or all of these problems, mostly by a spring device attached to the top face of the nut. Several of these designs have been marketed with mixed results due mainly to cost of manufacture and difficulty in application.

It is among the objects of the present invention to provide an improved spring for a channel nut of the kind specified, by means of which the above noted disadvantages can be avoided.

According to one aspect of the invention there is provided a spring for a channel nut of the kind specified comprising a body affording a plug portion adapted for reception in the screw-threaded bore of the channel nut and a resiliently flexible portion providing parts adapted for engagement with the bottom of a channel to allow said resiliently flexible portion to urge said plug portion, and thus any said channel nut engaged therewith, away from such channel bore.

The invention also extends to the combination of a channel nut of the kind specified with a spring according to the first-noted aspect of the invention.

The invention also extends to a method of assembling a structure comprising channels and nuts of the kinds specified and a spring according to the first aspect of the invention.

An embodiment of the invention is described below by way of example with reference to the accompanying drawings, wherein:

FIGURE 1 illustrates the known system, referred to above, utilising channels and nuts of the kinds specified, being a diagrammatic exploded perspective view,

FIGURES 2, 3 and 4 are respectively a plan view from above of a spring embodying the present invention, a view in vertical section through the spring and a side view of the spring looking in the direction of the arrow IV in Figure 3.

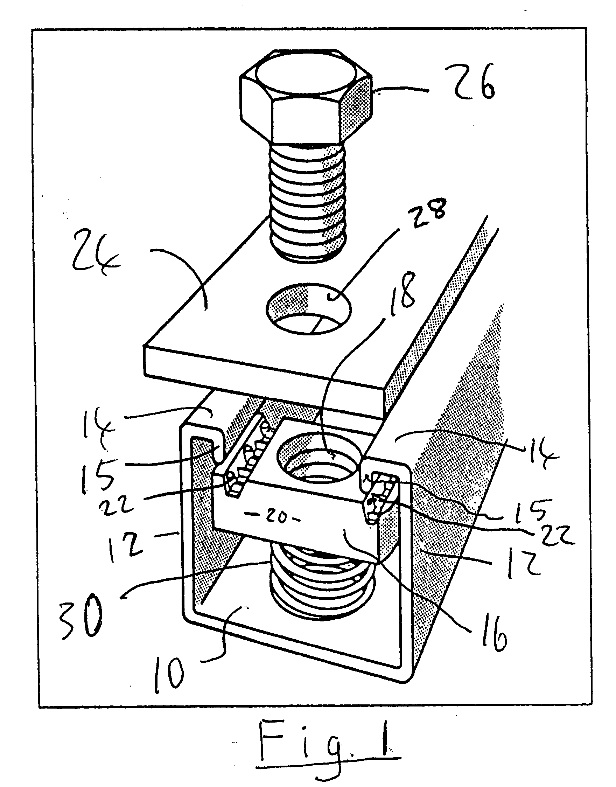

Referring to Figure 1 a preferred form of channel of the kind specified comprises a base wall 10, opposing parallel side walls 12 perpendicular to the base wall 10 terminating, remote from the base wall 10 in flange webs 14 which extend, in a common plane parallel with that of the base wall 10, towards one another from the walls 12. Each flange web 14 terminates, along its edge nearer to the other flange web 14, in an inwardly directed lip 15 forming the respective inturned edge of the channel. The nut 16 of the kind specified, in the preferred form, comprises an elongate metal block having a screw threaded bore 18 extending therethrough, the longer side faces 20 of the nut being parallel with one another and being spaced from one another by a distance slightly less than the width of the channel mouth i.e. slightly less than the spacing between the opposing faces of the lips 15. The shorter sides of the block, forming the ends of the nut, are rounded to facilitate rotation of the nut, about the axis of its bore 18, into the position shown in Figure 1. Extending transversely across the upper face of the nut, on either side of the bore 18, are grooves 22 which, in the assembled structure, receive the respective inturned edges of the channel (i.e. lips 15). The bottoms of the grooves 22 are serrated to afford teeth which bite into the inturned edges of the channel when the respective bolt is fully tightened. In Figure 1, the reference 24 indicates a fixing flange of a bracket or the like to be secured to the channel by a bolt 26 passed through a fixing hole 28 in the flange 24, through the mouth of the channel and into the bore 18 of the respective channel nut 16. Secured to the underside of the nut 16 and projecting downwardly therefrom is a helical wire spring 30, coaxial with the bore 18, and which serves to thrust the nut 16 away from the base wall 10 into engagement with the inturned edges of the channel, whereby the nut is held in place temporarily whilst the bracket or other member to be secured using the nut is held in position and the bolt 26 passed through the respective fixing hole 28 and the channel mouth and into the bore 18 and the bolt 26 subsequently screwed up tight. Once the bolt 26 has been screwed up tight, the spring 30 serves no further function.

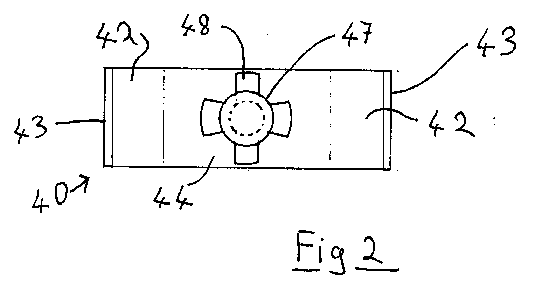

In accordance with the present invention, in place of the helical wire spring 30 utilised in the known construction, a plastics spring 40, illustrated in Figures 2 to 4, is used.

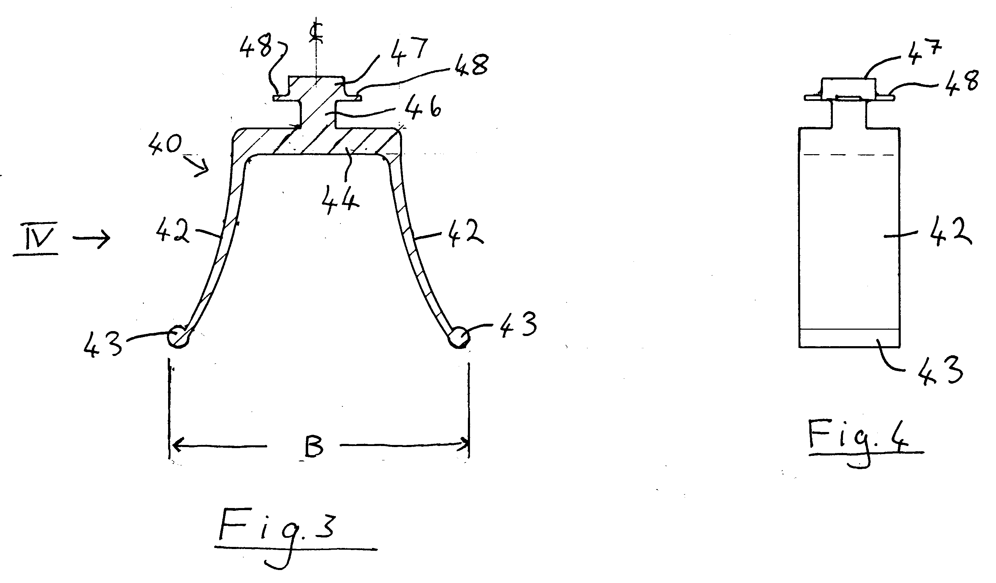

The spring 40 comprises a unitary moulding of resilient plastics, having the general form of a fork having two legs 42 diverging downwardly from a common connecting portion 44. From the middle of the connecting portion 44 there extends upwardly a spigot 46 of generally cylindrical form having, at its upper end, an enlarged head 47 from the bottom of which four vanes 48 radiate, the vanes 48 lying in a common plane perpendicular to the axis of spigot 46. The radial extent of each of the vanes 48 is such that the vaned head 47 is an interference fit in the screw-threaded bore 18. In a variant (not shown) the vanes 48 are replaced by a peripheral annular flange of a diameter such as to be an interference fit in the screw-threaded bore 18. The arrangement is such that the spigot 46, and head 47, with the vanes 48, may be pushed readily into the bore 18 of a channel nut but that the vanes 48 will engage frictionally with the screw threaded bore 18 sufficiently to keep the spring 40 connected with the nut unless it is forcibly removed. The spigot 46, head 47 and vanes 48 thus constitute a plug portion adapted for reception in the screw-threaded bore 18 of a channel nut. The legs 42 are preferably of a width substantially greater than their thickness and each terminates, at its free end, in a transversely elongate bearing surface, for engagement with the base 10 of the channel, said bearing surface, in the embodiment shown, being afforded by a respective transversely elongate bead 43 of substantially circular cross section. The legs 42 are preferably bowed somewhat as illustrated in Figure 3 to facilitate resilient flexing of the legs. The width of the spring, i.e. as measured along the line of sight in Figure 3, is, of course, somewhat less than the width of the channel mouth, to allow insertion of the spring, with the nut thereon, into the channel. The dimension B (Figure 3) between the free ends of the legs 42 is, however, preferably substantially greater than even the internal width of the channel, so that once inserted, with a nut, into the channel, the spring is prevented, by the channel sides, from rotating fully with the nut. Thus, using the spring in accordance with the invention, the operation of fitting a nut, of the form described with reference to Figure 1, but without the wire spring 30, into a channel, of the form described with reference to Figure 1, is as follows:

The spigot 46 of the spring with the head 47 and vanes 48, is inserted into the bore 18 of the nut from the underside of the nut, i.e. from the face opposite that provided with the transverse grooves. The nut and spring are then inserted through the channel mouth, with the legs 42 being spaced apart in the longitudinal direction of the channel and with the longer dimension of the nut being likewise aligned with the longitudinal direction of the channel. As the nut, with the spring, is inserted into the channel, the bearing surfaces at the free ends of the legs 42 engage the base 10 of the channel and, partially as a result of sliding of the bearing surfaces along the base 10 of the channel with the consequent springing apart of the legs 42 relative to the connecting portion 44 and partially as a result of bowing of the legs 42, the spring 40 is resiliently stressed as the nut reaches the position in which it lies below (i.e. inwardly of) the flanges 14 and inturned edges 15. The nut is now rotated through 90°, while the spring remains stationary, (the nut thus rotating on the spigot 46, head 47 and vanes 48), the nut being thereafter released allowing the spring to push the nut against the inturned edges 15 of the channel so that the inturned edges engage in the grooves 22. Thus, the nut is held in position until the respective bolt 18 is screwed into it.

When the bolt fixing a fitting to the channel face is screwed into the nut, the end of the bolt pushes on the end of head 47 causing the vanes 48 to deform and disengaging the spring from the nut. The spring, now redundant, either falls away or is freely removed from inside the channel. Provided that the vanes 48 are undamaged, the spring may be reused. Because the spring 40 is a push fit in the nut, it may be applied at the factory or on site by the erector.

The spring 40 described above has the following features and benefits.

1. It is cost effective.
2. The nut is undedicated. A spring can be fitted at any time to any nut and does not need special fixing equipment.
3. The nut/spring assembly is extremely stable. The transverse width of each leg and the spread of those legs make it virtually impossible to upset the assembly when offering it up to the channel.
4. The nuts and springs can be sold separately, and if factory assembled will not entangle in the box.
5. The plastic springs are cleared from each nut when assembly is complete thus affording a free passageway along the inside of the channel.
6. The springs may be re-used.
7. As the spring is made of non-ferrous material there is no rusting of the spring to cause rust staining of the channel.

It will be appreciated that many variations are possible within the scope of the appended claims. Thus, for example, the spring may be made of some other material, for example rubber or spring steel (with appropriate changes to the configuration of the spring to suit the material used). The spring may have legs of a different form from that illustrated or may have some analogous formation, for example in the form of a split skirt or concertina-shaped formations.

**Claims**

1.  A spring for a channel nut of the kind specified comprising a body affording a plug portion adapted for reception in the screw-threaded bore of the channel nut and a resiliently flexible portion providing parts adapted for engagement with the bottom of a channel to allow said resiliently flexible portion to urge said plug portion, and thus any said channel nut engaged therewith, away from such channel bore.

2. A spring according to claim 1 which is in the form of a unitary moulding of resilient plastics.

3. A spring according to claim 2 or claim 3 wherein said resiliently flexible portion comprises a pair of legs diverging from a connecting portion carrying said plug portion.

4. The combination of a channel nut of the kind specified with a spring according to any of claims 1 to 3.

5. A method of assembling a structure comprising a channel of the kind specified, and a further member secured to said channel by means of a bolt screwed into a channel nut of the kind specified, the method comprising fitting a spring according to any of claims 1 to 3 to the rear side of the channel nut, with the plug portion of the spring engaged in the screw-threaded bore in the nut fitting the nut/spring combination into said channel so that said parts of the resiliently flexible portion engage the bottom of the channel and the nut, with its longer dimension extending in the longitudinal direction of the channel, passes into the channel between the channel flanges, and thereby resiliently stressing said flexible portion of the spring, turning the nut, after pushing it past said flanges, so that its longer dimension lies transverse to the channel and the ends of the nut locate behind said flanges, and thereafter releasing the nut whereby the latter is held by the spring against said flanges, in the desired position, to allow said bolt to be screwed into the bore of the nut.

6. A structure assembled by the method of claim 5.

Fig. 1

Fig 2

Fig. 3

Fig. 4

48   47   48   46   40   44   42   42   43   43   B   IV

47   48   42   43

EP 0 516 321 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 741 582 (PERONI)<br>* column 2, line 27 - line 41 *<br>* column 3, line 14 - line 19; figures 1-10 *<br>--- | 1-4,6 | F16B37/04<br>F16F1/18 |
| A | EP-A-0 149 128 (GTE PRODUCTS CORPORATION)<br>* page 8, line 3 - line 16; figures 1-14 *<br>--- | 1,5 | |
| A | GB-A-602 540 (CRUDEN)<br>* page 2, line 47 - page 3, line 15; figures 1,2 *<br><br>--- | 1,6 | |
| A | DE-A-2 635 439 (HANS KNÜRR KG MECHANIK FÜR DIE ELEKTRONIK)<br>* page 11, line 11 - page 14, line 6; figures 1-6 *<br><br>----- | 1 | |
| | | | TECHNICAL FIELDS SEARCHED (Int. Cl.5 )<br><br>F16B<br>F16F<br>E04B |

The present search report has been drawn up for all claims

| Place of search | Date of completion of the search | Examiner |
|---|---|---|
| THE HAGUE | 11 SEPTEMBER 1992 | CALAMIDA G. |

EPO FORM 1503 03.82 (P0401)